# EUROPEAN PATENT SPECIFICATION

(11) **EP 3 872 613 B1**
(45) Date of publication and mention of the grant of the patent: **16.07.2025**
(21) Application number: 20211360.1
(22) Date of filing: 02.12.2020
(51) Int. Cl.: G06F 3/12, G07G 5/00, G06F 8/65, G06Q 20/20, G07G 1/00

(54) **INFORMATION PROCESSING APPARATUS, INFORMATION PROCESSING SYSTEM, AND METHOD**
INFORMATIONSVERARBEITUNGSVORRICHTUNG UND INFORMATIONSVERARBEITUNGSSYSTEM UND VERFAHREN
APPAREIL DE TRAITEMENT D'INFORMATIONS, SYSTÈME ET PROCÉDÉ DE TRAITEMENT D'INFORMATIONS

(30) Priority: 25.02.2020 JP 2020029735
(43) Date of publication of application: 01.09.2021
(73) Proprietor: Toshiba TEC Kabushiki Kaisha, Tokyo 141-8562 (JP)
(72) Inventor: SHIMOMURA, Hiroshi, Shinagawa-ku, Tokyo 141-8562 (JP)
(74) Representative: Bandpay & Greuter

(56) References cited:
- EP-A1- 2 328 084
- JP-A- 2012 048 565
- US-A1- 2012 210 442

## Description

### FIELD

Embodiments described herein relate generally to an information processing apparatus, an information processing system, and a method.

### BACKGROUND

In the related art, a technique of updating setting data and programs of a terminal device (terminals) such as a label printer, a point-of-sale system (POS), and a measuring instrument, which are installed in a store such as a supermarket through a higher server connected via a network such as a local area network (LAN) or through a storage medium such as a universal serial bus (USB) is known.

However, the setting of the program, the version of the program to be applied, and the like may vary for each installation location or each terminal. Therefore, before the program is updated through the network or the storage medium, a worker is required to check a device number, a program version, or the like in an installation location of the terminal and then to determine whether the program of the terminal is required to be replaced.

US 2012/210442 A1 and EP 2328084 A1 each discloses an information processing system connected to terminals such as a printer.

### DESCRIPTION OF THE DRAWINGS

FIG. 1 is a diagram illustrating an example of a configuration of a label printer system according to an embodiment;
FIG. 2 is a schematic diagram illustrating an example of the appearance of a label printer according to the embodiment;
FIG. 3 is a block diagram illustrating an example of a hardware configuration of the label printer according to the embodiment;
FIG. 4 is a block diagram illustrating an example of a functional configuration of the label printer according to the embodiment;
FIG. 5 is a block diagram illustrating an example of a hardware configuration of a terminal information management server according to the embodiment;
FIG. 6 is a diagram illustrating an example of a structure of terminal information stored in the terminal information management server according to the embodiment;
FIG. 7 is a diagram illustrating an example of a structure of incident information stored in the terminal information management server according to the embodiment;
FIG. 8 is a block diagram illustrating an example of a functional configuration of the terminal information management server according to the embodiment;
FIG. 9 is a sequence diagram illustrating an example of a flow of installation of the label printer and function setting, which are performed in the label printer system according to the embodiment;
FIG. 10 is a schematic diagram illustrating an example of a display screen displayed in the label printer according to the embodiment; and
FIG. 11 is a sequence diagram illustrating an example of a flow of a program update of the label printer, which is performed in the label printer system according to the embodiment.

### DETAILED DESCRIPTION

An aspect of the present disclosure is to reduce a workload for updating a program of the terminal.

An information processing apparatus and an information processing system according to appended claims are provided to solve the above-mentioned problems.

Preferably, when a function to be updated by applying the update program is validated in the terminal, the update management component determines that the terminal is a target of applying the update program.

Preferably, the terminal is one of a label printer, a point-of-sale system, and a measuring instrument.

Preferably, the update program comprises merchandise information.

Preferably, the merchandise information comprises at least one of a merchandise name, a merchandise price, a processing date, a freshness date, an expiration date, and a production place.

According to the information processing system, preferably, when the function validated or invalidated among a plurality of functions of the application installed on the terminal is changed, the communication component transmits the terminal information to the information processing apparatus.

Preferably, the information processing system further comprises a display configured to display a display screen for causing a user to confirm whether or not the update program is applied to the terminal, when the communication component confirms that the update program is stored in the predetermined storage area.

Preferably, the terminal is one of a label printer, a point-of-sale system, and a measuring instrument.

Preferably, the update program comprises merchandise information.

Preferably, the merchandise information comprises at least one of a merchandise name, a merchandise price, a processing date, a freshness date, an expiration date, and a production place.

The invention also relates to a method according to appended claim 12.

Preferably, the method further comprises checking whether or not the update program exists in a predetermined storage area of the information processing apparatus.

Preferably, the method further comprises, when the function validated or invalidated among a plurality of functions of the application installed on the terminal is changed, transmitting the terminal information to an information processing apparatus.

Preferably, the method further comprises displaying a display screen for causing a user to confirm whether or not the update program is applied to the terminal, when confirming that the update program is stored in a predetermined storage area.

Hereinafter, an information processing apparatus (terminal information management apparatus), an information processing system (terminal information management system), and a program according to an embodiment will be described with reference to the drawings.

In the embodiment described below, a label printer system 1 that prints a label indicating information associated with a merchandise will be described as an example of the information processing system. The disclosure is not limited to the embodiment described below.

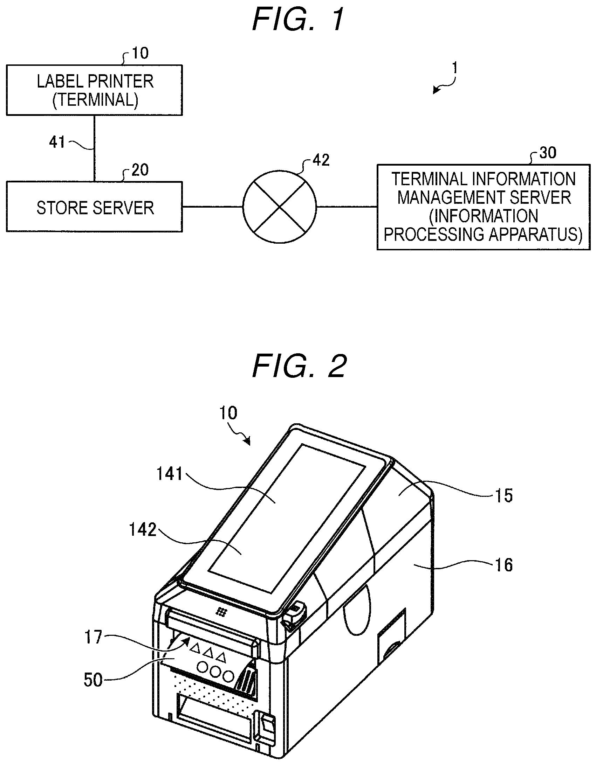

FIG. 1 is a diagram illustrating an example of a configuration of the label printer system 1 according to an embodiment. As illustrated in FIG. 1, the label printer system 1 includes a label printer 10, a store server 20, and a terminal information management server 30.

The label printer 10 and the store server 20 are connected to each other via a network 41. The network 41 is a wired or wireless local area network (LAN) in a store, for example. The store server 20 and the terminal information management server 30 are connected to each other via a network 42. The network 42 is an electrical communication line such as the Internet, for example.

In the embodiment, the label printer 10 will be described as an example of a terminal in the information processing system. In the embodiment, the terminal information management server 30 will be described as an example of the information processing apparatus in the information processing system.

In the embodiment, the label printer (terminal) 10 on which at least one application is installed (mounted) will be described. Here, it is assumed that each application is a program that realizes a functional group including at least one function by executing the application. It is assumed that the application (program) is enabled to be replaced (updated) by an update program supplied from an outside.

The label printer 10 may be connected to the terminal information management server 30 via the network 42.

Although FIG. 1 illustrates the label printer system 1 including one label printer 10 and one store server 20, the disclosure is not limited thereto. The label printer system 1 may include a plurality (two or more) of label printers 10. The label printer system 1 may include a plurality (two or more) of store servers 20.

FIG. 2 is a schematic diagram illustrating an example of an appearance of the label printer 10 according to the embodiment. The label printer 10 is a printer that prints a label 50 to be attached to a merchandise. As illustrated in FIG. 2, the label printer 10 includes a display 141, a touch panel 142, an upper cover 15, and a main body cover 16.

The upper cover 15 is connected to the main body cover 16 to be rotatable. In other words, in the label printer 10, the upper cover 15 is openable and closable. The label printer 10 includes a storage unit (not illustrated) that stores roll-like label paper in the main body cover 16. The upper cover 15 and the main body cover 16 form a label dispensing port 17. The label dispensing port 17 dispenses the label 50. The label 50 is a printed medium on which merchandise information of a merchandise to be attached is printed. The merchandise information is, for example, information such as a merchandise name, merchandise price, a processing date (manufacturing date), a freshness date, an expiration date, a production place, and the like. The merchandise information may include a message and the like of a producer or a store clerk to a customer who purchases the merchandise.

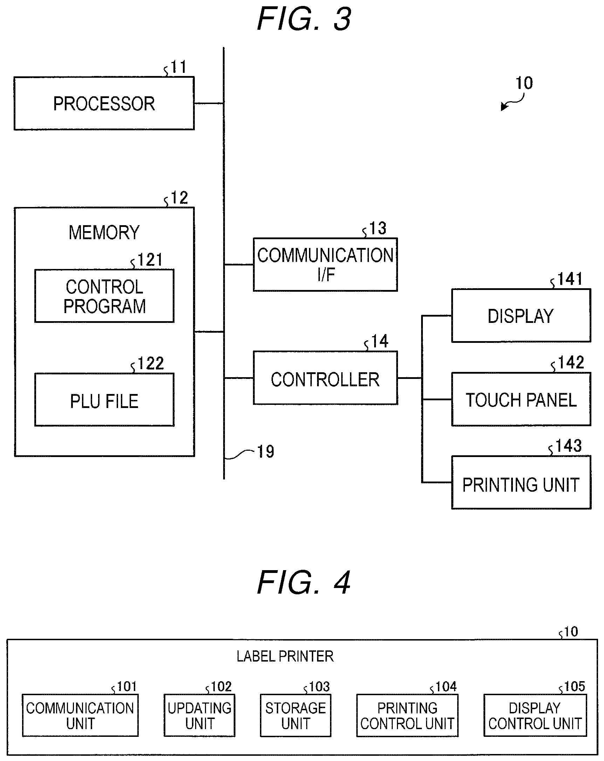

FIG. 3 is a block diagram illustrating an example of a hardware configuration of the label printer 10 according to the embodiment. As illustrated in FIG. 3, the label printer 10 further includes a processor 11, a memory 12, a communication I/F 13, a controller 14, and a printing unit 143. The processor 11, the memory 12, the communication I/F 13, and the controller 14 are connected to each other, for example, by a bus 19 to enable communication.

The processor 11 controls the entire operation of the label printer 10. The processor 11 executes a program such as a control program 121 stored in the memory 12 to control the operation of the label printer 10. For example, a central processing unit (CPU) is used as the processor 11. Other processors such as a graphics processing unit (GPU), an application specific integrated circuit (ASIC), and a field programmable gate array (FPGA) may be used as the processor 11.

As an example, the memory 12 includes a random access memory (RAM), a read only memory (ROM), and a hard disk drive (HDD). The RAM is a volatile memory which is used as a working memory and in which data is stored when the processor 11 performs arithmetic operation processing. The ROM is a non-volatile memory that stores a program such as the control program 121 executed by the processor 11, and data such as a parameter. The HDD is a non-volatile memory that stores a program such as the control program 121 executed by the processor 11, and data such as a parameter and a price look up (PLU) file 122.

In the PLU file 122, for each merchandise code, merchandise information regarding a merchandise indicated by a merchandise code and an update date and time of the merchandise information are stored in association with each other. Regarding the PLU file 122, the PLU file stored in a memory (not illustrated) of the store server 20 is distributed at a predetermined timing. The PLU file 122 may be distributed from the terminal information management server 30. The merchandise information herein is information representing attributes of a merchandise such as a merchandise name, merchandise price, a processing date (manufacturing date), a freshness date, an expiration date, a production place, and the like. The merchandise information is updated every time the merchandise information is received from the store server 20. That is, the merchandise information stored in the PLU file 122 is merchandise information which was previously received from the store server 20. The update date and time is information indicating date and time when the PLU file 122 is updated.

The memory 12 may include another non-volatile memory such as a solid state drive (SSD) and a flash memory. In this case, the program such as the control program 121 executed by the processor 11, and the data such as the parameter and the PLU file 122 may be stored in the other non-volatile memory.

The communication I/F 13 is a communication circuit that communicates with the store server 20 via the network 41. The communication I/F 13 may be a communication circuit for wired communication or a communication circuit for wireless communication. The communication I/F 13 may be configured as a communication circuit that communicates with the terminal information management server 30.

The controller 14 is an interface circuit connected to the display 141, the touch panel 142, and the printing unit 143. The controller 14 includes a driver that controls the operation of each of the display 141, the touch panel 142, and the printing unit 143, in accordance with a control signal from the processor 11.

As illustrated in FIG. 2, the display 141 is disposed on the upper cover 15, for example. The display 141 is a display device such as a liquid crystal display, for example. The display 141 displays display screen data in accordance with the control of the processor 11.

The touch panel 142 is a touch input device stacked on the surface of the display 141. The touch panel 142 outputs an operation signal in response to an operation of a user.

The printing unit 143 is disposed inside the main body cover 16. The printing unit 143 forms the label 50 by printing merchandise information and the like on roll-like label paper stored in the storage unit (not illustrated), in accordance with the control of the processor 11.

FIG. 4 is a block diagram illustrating an example of a functional configuration of the label printer 10 according to the embodiment. The processor 11 executes the control program 121 loaded on the RAM of the memory 12 to realize functions as a communication unit 101, an updating unit 102, a storage unit 103, a printing control unit 104, and a display control unit 105.

The communication unit 101 communicates with the store server 20. Such communication includes communication with the terminal information management server 30 through the store server 20. The communication unit 101 transmits information regarding function setting such as validation or invalidation of the function of the label printer 10 and information such as an update result of the program. When the power turns on, the communication unit 101 checks whether or not the update program is stored in a program update folder 323 for the own terminal of the terminal information management server 30. The communication unit 101 receives the update program from the program update folder 323 for the own terminal of the terminal information management server 30.

The updating unit 102 stores the update program received by the communication unit 101 in the storage unit 103. The updating unit 102 performs update processing on a terminal side, in which the update program received by the communication unit 101 is applied to the terminal. The updating unit 102 sets validation or invalidation for at least one function of the application installed on the label printer 10, in accordance with an operation result of the touch panel 142 or the like by the user, for example.

The storage unit 103 stores a program such as the control program 121 executed by the processor 11, and the data such as the parameter. The storage unit 103 stores terminal information regarding the own terminal. The terminal information regarding the own terminal includes information such as a program applied to the label printer 10, the version of the program, and a validated or invalidated function.

The printing control unit 104 refers to the PLU file 122 based on a merchandise code from a higher device such as a point-of-sale system (POS) or a computer, or a handy scanner, to read merchandise information of the merchandise corresponding to the merchandise code. Here, the merchandise code refers to identification information enabled to identify a merchandise. The printing control unit 104 arranges the read merchandise information, for example, in a predetermined format set and stored in advance in the storage unit 103, and generates printing data of the label 50. The printing control unit 104 forms the label 50 by the printing unit 143 based on the generated printing data and then dispenses the label.

The display control unit 105 generates image data such as an operation screen, a confirmation screen of whether or not program update is required, a confirmation screen of a function validated or invalidated in the own terminal, a setting screen for setting validation or invalidation of each function of the own terminal, and the like. The display control unit 105 displays the screen on the display 141 based on the generated image data.

The store server 20 transmits information regarding the label printer 10 to the terminal information management server 30 via the network 42. The information regarding the label printer 10 includes setting of the label printer 10, an update result of the program, and the like. The store server 20 transmits information from the terminal information management server 30 to the label printer 10 via the network 41. The information from the terminal information management server 30 includes the update program of the label printer 10 and the like. The store server 20 may receive a merchandise master and the like from the terminal information management server 30 via the network 42.

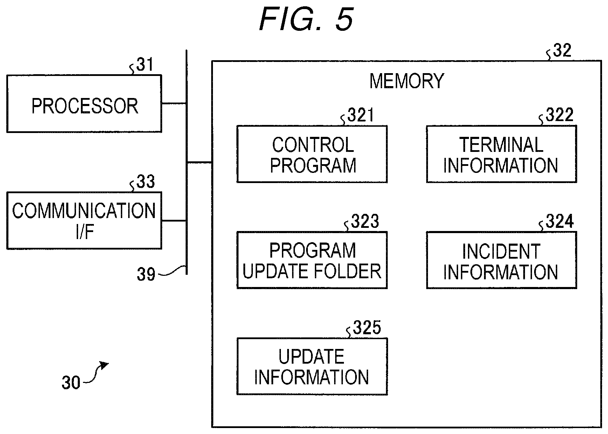

FIG. 5 is a block diagram illustrating an example of a hardware configuration of the terminal information management server 30 according to the embodiment. The terminal information management server 30 is a server device that manages information (terminal information 322) regarding the label printer 10 in each store. As illustrated in FIG. 5, the terminal information management server 30 includes a processor 31, a memory 32, and a communication I/F 33. The processor 31, the memory 32, and the communication I/F 33 are connected to each other, for example, by a bus 39 to enable communication.

The processor 31 controls the entire operation of the terminal information management server 30. The processor 31 executes a program such as a control program 321 stored in the memory 32 to control the operation of the terminal information management server 30. For example, a CPU is used as the processor 31. Other processors such as a GPU, an ASIC, and an FPGA may be used as the processor 31.

As an example, the memory 32 includes a RAM, a ROM, and an HDD. The RAM is a volatile memory which is used as a working memory and in which data is stored when the processor 31 performs arithmetic operation processing. The ROM is a non-volatile memory that stores a program such as the control program 321 executed by the processor 31, and data such as a parameter. The HDD is a non-volatile memory that stores a program such as the control program 321 is executed by the processor 31, and data such as a parameter, terminal information 322, a program update folder 323, incident information 324, and update information 325.

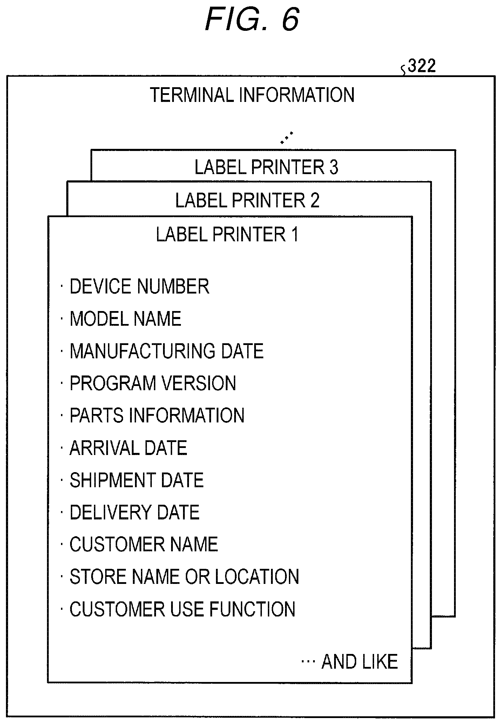

The terminal information 322 is information that indicates a validated or invalidated function among at least one function (plurality of functions) of at least one application installed on the label printer 10. FIG. 6 is a diagram illustrating an example of a structure of the terminal information 322 stored in the terminal information management server 30 according to the embodiment. As illustrated in FIG. 6, the terminal information 322 includes, for each label printer 10, information such as a device number, a model name, a manufacturing date, a program version, parts information, an arrival date, a shipment date, a delivery date, a customer name, a store name or location, and a customer use function.

The device number is unique information given for each label printer 10. The model name is information indicating the model of the label printer 10. The manufacturing date is information indicating the date on which the label printer 10 is manufactured. The terminal information 322 is not limited to the manufacturing date and may further include information such as a manufacturing location or a manufacturing line.

The program version is information indicating the version of each application (program) installed on the label printer 10.

The parts information is information indicating parts used in the label printer 10. The arrival date is information indicating the date on which the manufactured label printer 10 is received in a warehouse or the like. The terminal information 322 is not limited to the arrival date and may further include information such as the location of the warehouse. The shipment date is information indicating the date on which the label printer 10 is shipped from the warehouse or the like for delivery. The delivery date is information indicating the date on which the label printer 10 is delivered to a customer. The customer name refers to information indicating the customer to which the label printer 10 is delivered. The store name or location is information indicating the location to which the label printer 10 is delivered. As the store name or location, either a store name of a store where the label printer 10 is delivered or the location of the store may be provided.

The customer use function is information indicating a function validated as a function to be used by the customer among a plurality of functions of an application for each application installed on the label printer 10.

The function that the label printer 10 can realize can be determined from the program version of the application, for example. However, the terminal information 322 may include information explicitly indicating the function that the label printer 10 can realize. The terminal information 322 may include information explicitly indicating a function invalidated as a function which is not used by the customer among the plurality of functions of the application for each application installed on the label printer 10.

The program update folder 323 is a storage location of the update program prepared for each label printer 10. The program update folder 323 may store other data of the update program supplied (distributed) to the label printer 10. The program update folder 323 is an example of a predetermined storage area.

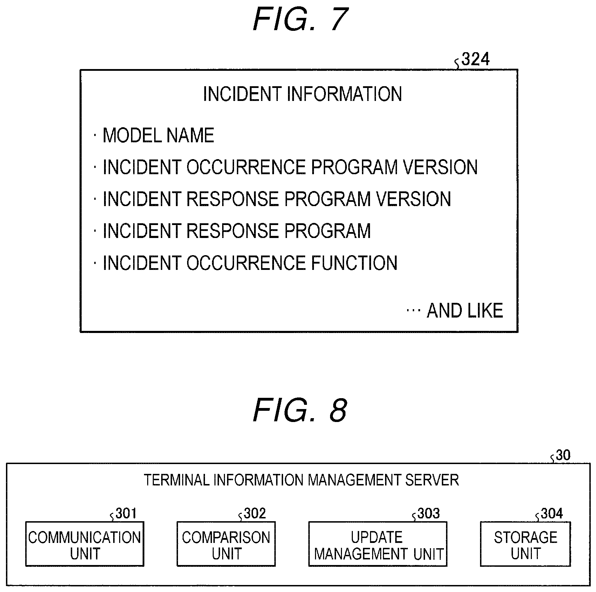

The incident information 324 is information registered when an incident occurs, for example, from a computer in a quality assurance department. FIG. 7 is a diagram illustrating an example of a structure of the incident information 324 stored in the terminal information management server 30 according to the embodiment. As illustrated in FIG. 7, the incident information 324 includes information such as a model name, an incident occurrence program version, an incident response program version, an incident response program, and an incident occurrence function.

The model name is information indicating the model of the label printer 10 in which an incident occurs. The incident occurrence program version is information indicating the version of a program in which an incident occurs. The incident response program version is information indicating the version of an update program for a response to the incident. The incident response program is an application (update program) updated for the response to the incident. The incident occurrence function is information indicating a function in which an incident occurs.

The incident occurrence function can be expressed to be a function of the application (program) in which the incident occurs. Similarly, the program in which the incident occurs can be expressed to be an application including the incident occurrence function. The incident occurrence program version can be expressed to be information indicating the version of the application including the incident occurrence function.

For example, the update information 325 is information registered when an update occurs, for example, when an update program for increasing an operation speed of the application or improving stability is provided, from a computer in the manufacturing department or a quality assurance department. As an example, the structure of the update information 325 is similar to the above-described structure of the incident information 324. For example, the update information 325 includes information such as a model name, an update occurrence program version, an update response program version, an update response program, and an update occurrence function. The incident information 324 and the update information 325 may not be distinguished from each other. That is, the incident information 324 and the update information 325 may be stored as one piece of information.

The response to the incident or the update includes addition of a new function realized by executing the update program.

The memory 32 may include another non-volatile memory such as an SSD and a flash memory. In this case, the other non-volatile memory stores the program such as the control program 321 executed by the processor 31, data such as a parameter, and data such as the terminal information 322, the program update folder 323, the incident information 324, and the update information 325.

The communication I/F 33 is a communication circuit that communicates with the store server 20 via the network 42. The communication I/F 33 may be a communication circuit for wired communication or a communication circuit for wireless communication. The communication I/F 33 may be configured as a communication circuit that communicates with the label printer 10.

The terminal information management server 30 may include an input device such as a keyboard or a mouse.

FIG. 8 is a block diagram illustrating an example of a functional configuration of the terminal information management server 30 according to the embodiment. The processor 31 executes the control program 321 loaded on the RAM of the memory 32 to realize functions as a communication unit 301, a comparison unit 302, an update management unit 303, and a storage unit 304.

The communication unit 301 communicates with the store server 20. Such communication includes communication with the label printer 10 through the store server 20. The communication unit 301 receives information such as manufacturing information, or arrival or shipment information from a computer of the manufacturing department or the warehouse, a sales, or the like, delivery information, the incident information 324, and the update information 325. The communication unit 301 receives information regarding function setting such as validation or invalidation of the function of the label printer 10 and information such as an update result of the program.

The comparison unit 302 performs function comparison processing when the incident information 324 or the update information 325 is written. Details of the function comparison processing will be described later. The processor 31 that realizes the comparison unit 302 is an example of a comparison unit.

The update management unit 303 performs program update processing on the server side, based on a comparison result obtained by the comparison unit 302. Details of the program update processing on the server side will be described later. The processor 31 that realizes the update management unit 303 is an example of an update management unit.

The storage unit 304 stores the program such as the control program 321 executed by the processor 31, and the data such as the parameter. The storage unit 304 stores information such as the terminal information 322 of each label printer 10, the incident information 324, and the update information 325.

A flow of an application update of the label printer 10, which is performed in the label printer system 1 according to the embodiment will be described below with reference to the drawings.

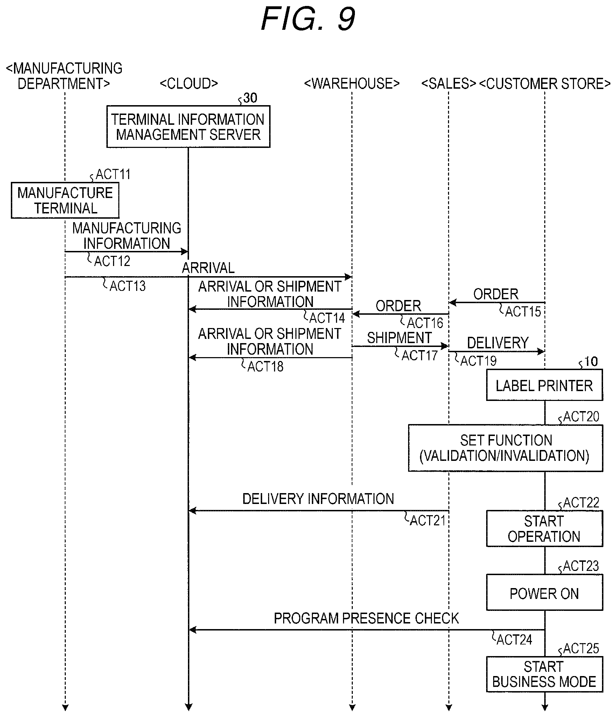

FIG. 9 is a sequence diagram illustrating an example of a flow of installation of the label printer 10 and function setting, which are performed in the label printer system 1 according to the embodiment.

First, in the manufacturing department, a label printer 10 (terminal) is manufactured (ACT 11). In the manufacturing department, after the label printer 10 (terminal) is manufactured, "manufacturing information" is written in terminal information 322 of the terminal information management server 30 (ACT 12). Such writing may be performed with, for example, a computer which is provided in the manufacturing department and is connected to the network 42. The "manufacturing information" includes information such as a model name, a device number, a program version, a manufacturing date, and parts information.

The label printer 10 is stored in a warehouse from the manufacturing department (ACT 13). In the warehouse, the label printer 10 is shipped to a sales (sales office) in response to an order (ACT 16) from the sales that received an order (ACT 15) of the label printer 10 from a customer (ACT 17). In the warehouse, when the label printer 10 is received (ACT 14) or shipped (ACT 18), "arrival or shipment information" relating to the terminal is written in the terminal information 322 of the terminal information management server 30. Such writing may be performed with, for example, a computer which is provided in the warehouse and is connected to the network 42. The "arrival or shipment information" includes information such as a device number, an arrival date, and a shipment date.

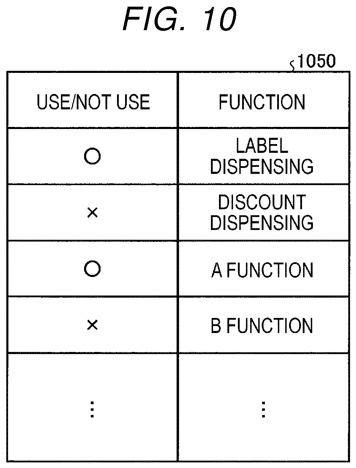

In the sales, the shipped label printer 10 is delivered to a customer store (ACT 19). At this time, in the sales, at least one function of each application installed on the label printer 10 is set to be validated or invalidated (ACT 20). FIG. 10 is a schematic diagram illustrating an example of a display screen 1050 displayed in the label printer 10 according to the embodiment. As illustrated in FIG. 10, the display control unit 105 causes the display 141 to display the display screen 1050 for setting validation or invalidation of at least one function of each application installed on the label printer 10. In the sales or the customer store, with the display screen 1050, it is possible to check setting of the validation or invalidation of each function in the customer store or to set the validation or invalidation in response to a use or a not-use of the function in the customer store by using the touch panel 142 disposed on the display 141. Here, in the display screen 1050, a function such as a label dispensing function and a discount dispensing function of dispensing a discount sticker is an example of at least one function of a printing application installed on the label printer 10, for example.

In the sales, after the shipment and setting of the label printer 10, "delivery information" relating to the terminal is written in the terminal information 322 of the terminal information management server 30 (ACT 21). Such writing may be performed with, for example, a computer which is provided in the sales and is connected to the network 42, and may be performed with the label printer 10 or the store server 20. The "delivery information" includes information such as a delivery date, a customer name, a store name or location, a model name, a device number, a program version, and a customer use function.

The validation or invalidation of the function of the label printer 10 may be set by the customer (customer store). The setting may be performed in advance in accordance with the request of the customer before the delivery. In this case, a part of the "delivery information" may be written before the delivery. The setting may be changed at a desired timing after the delivery.

When the "delivery information" is written using the label printer 10, the updating unit 102 in the label printer 10 validates or invalidates the function of the label printer 10 in response to an input of the user from the touch panel 142. The storage unit 103 stores setting information indicating the validated or invalidated function. The communication unit 101 transmits the setting information stored in the storage unit 103 to the terminal information management server 30. As described above, when the validated or invalidated function is changed, the communication unit 101 transmits information regarding the customer use function, which is included in the terminal information 322, to the terminal information management server 30.

Then, in the customer store, the operation of the label printer 10 is started (ACT 22). When the power of the label printer 10 turns on (ACT 23), the communication unit 101 checks the presence of a program for an update (update program) (ACT24). Specifically, the communication unit 101 checks whether or not the update program is stored in the program update folder 323 of the terminal information management server 30. When there is no update program, the label printer 10 starts an operation in a general business mode (ACT 25). After the operation in the business mode is started, if necessary, the label printer 10 receives a merchandise master from the store server 20 or the terminal information management server 30 and updates the merchandise master (PLU file 122) stored in the storage unit 103. A flow when there is an update program will be described later.

As described above, the terminal information management server 30 manages the terminal information 322 relating to each label printer (terminal) 10. In the label printer (terminal) 10, the presence of the update program is checked every time the power turns on.

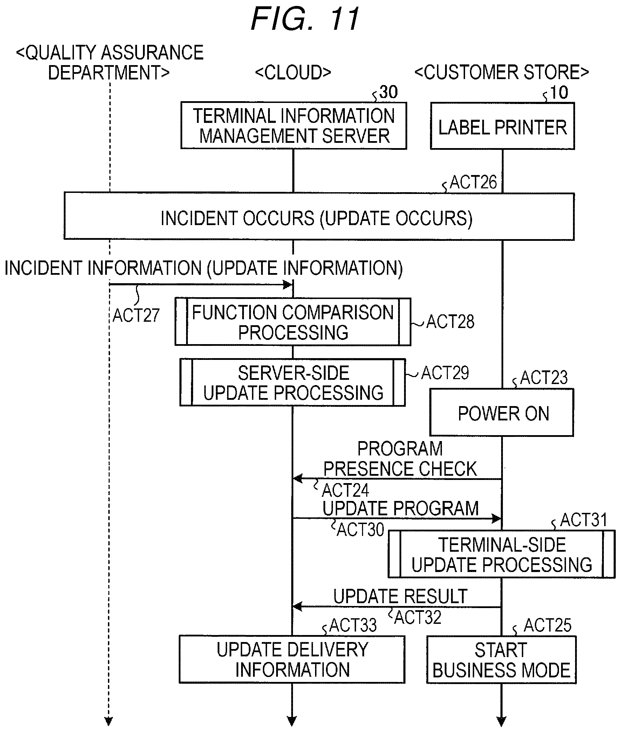

FIG. 11 is a sequence diagram illustrating an example of a flow of a program update of the label printer 10, which is performed in the label printer system 1 according to the embodiment. FIG. 11 is an example of a flow of a work performed when a situation occurs in which an incident or an update occurs for the label printer (terminal) 10 and thus the program of the label printer 10 is changed.

The incident or the update occurs for the label printer (terminal) 10 (ACT 26). At this time, in the quality assurance department, incident information 324 or update information 325 is written in the terminal information 322 of the terminal information management server 30 (ACT 27). Such writing may be performed with, for example, a computer which is provided in the quality assurance department and is connected to the network 42. At this time, the communication unit 301 in the terminal information management server 30 receives the incident information 324 or the update information 325 from the quality assurance department. The storage unit 304 stores the received information.

After the incident information 324 or the update information 325 is received, the comparison unit 302 performs function comparison processing (ACT 28). The function comparison processing is a process that the terminal information 322 (customer use function) indicating the validated or invalidated function among the plurality of functions of the application installed on the label printer (terminal) 10 is compared with a function updated by applying the update program among the plurality of functions of the application installed on the label printer (terminal) 10, that is, by updating the application. Here, the update program is the incident response program of the incident response program version or the update response program of the update response program version. Although the description will be continued with an example of the flow when an incident occurs, the description will be similarly applied to a flow when an update occurs.

Specifically, the comparison unit 302 compares the program version of the terminal information 322 and the incident occurrence program version of the incident information 324 with each other. When the program versions are coincident with each other, the comparison unit 302 compares the incident occurrence function and the customer use function with each other. Here, the incident occurrence function is updated by applying the update program among a plurality of functions of the application realized by the update program.

When the incident occurrence function and the customer use function coincide with each other, the update management unit 303 performs program update processing on the server side (ACT 29). The program update processing on the server side includes processing of determining whether or not the label printer (terminal) 10 is a target of applying the update program, based on the function comparison result obtained by the comparison unit 302.

Specifically, when the incident occurrence function and the customer use function coincide with each other, that is, when the incident occurrence function in the label printer (terminal) 10 is validated, the update management unit 303 determines that the terminal is the target of applying the update program (application update). Therefore, when the incident occurrence function and the customer use function coincide with each other, the update management unit 303 stores the update program in the program update folder 323 for the terminal.

When the power of the label printer 10 turns on (ACT 23), the communication unit 101 in the label printer 10 checks the presence of a program for an update (update program). When there is an update program, the communication unit 101 receives the update program from the program update folder 323 for the own terminal (ACT 30). The updating unit 102 stores the received update program in the storage unit 103 and performs update processing on the terminal side, which is applied to the own terminal (ACT 31). Then, the communication unit 101 notifies the terminal information management server 30 of an update result (ACT 32). The communication unit 301 in the terminal information management server 30 receives the update result from the label printer 10 and updates the terminal information 322 of the terminal (ACT 33). After the notification of the update result, the label printer 10 starts the operation in the general business mode (ACT 25).

The flows in FIGS. 9 and 11 are examples. At least two out of the manufacturing department, the warehouse, and the sales may be integrally operated. The above-described work of the program update may be performed for the label printer 10 before shipment.

In the embodiment, the case where the update program is distributed to the terminal determined to be the target of applying the update program, and the update program is applied to the terminal at a timing of power-on was described as an example. However, the disclosure is not limited to the above case. The label printer (terminal) 10 may not be able to secure a time to apply the update program at a step in which the presence of the update program is confirmed, for example, when the power turns on in preparation for starting a work before the business start. Also, the priority of the function may be low depending on the user. Therefore, the display control unit 105 may display a confirmation screen (display screen) on the display 141 in order for the user to confirm whether or not the update program is applied to the label printer 10 (terminal). As an example, the confirmation screen is a display screen on which the function to be updated is highlighted in the display screen showing, for example, the functions as illustrated in FIG. 10 and the valid or invalid state thereof. As another example, the confirmation screen is a display screen on which only the function to be updated is displayed. According to such a display screen, the user can determine whether or not to update the function in accordance with the priority and the like in a task of the target function. The confirmation screen may be a display screen for inquiring the user whether or not the program update is permitted and a timing of the program update. In this case, the user causes the update program to be applied. For example, the user can cause the update program to be applied when the power of the label printer 10 (terminal) turns off, for example, after the business.

In the embodiment, the case where, when the power turns on, the communication unit 101 in the label printer 10 checks the presence of the program for the update (update program) was described. However, the disclosure is not limited thereto. For example, the communication unit 101 may check the presence of the update program when the power turns off. For example, the communication unit 101 may check the presence of the update program at a timing corresponding to an operation of the user.

As an example, the update program is supplied to the label printer 10 (terminal) from the terminal information management server 30 (information processing apparatus) via the networks 41 and 42. However, the disclosure is not limited thereto. The update program may be stored in the memory of the store server 20 from the terminal information management server 30 (information processing apparatus) via the network 42, and then may be supplied to the label printer 10 (terminal) from the store server 20.

Some or all the functions as the comparison unit 302, the update management unit 303, and the storage unit 304 may be realized in the store server 20. The store server 20 and the terminal information management server 30 may be integrally configured. In these cases, the store server 20 can be expressed to be an example of the information processing apparatus.

Some of the functions as the comparison unit 302, the update management unit 303, and the storage unit 304 may be realized in the label printer 10. In this case, the label printer 10 can be expressed to be an example of the information processing apparatus. The information processing apparatus according to the embodiment, which realizes some of the functions as the comparison unit 302, the update management unit 303, and the storage unit 304 may be installed on the label printer 10 (terminal).

In the embodiment, the case where the updated application (update program) is provided in order to replace the application (program) of the terminal in response to the function validated in the terminal was described. However, the disclosure is not limited thereto. The information processing apparatus according to the embodiment can provide a program (update program) for correcting the application (program) of the terminal in response to the function validated in the terminal. The information processing apparatus according to the embodiment can also provide setting information or a program for setting (update program) in order to change the function setting (validation or invalidation) in the terminal. Thus, it is possible to realize the response to stop (invalidate) the incident occurrence function, during, for example, the period from the occurrence of an incident until the incident response program is prepared.

As described above, for each label printer 10 (terminal) installed in a store, the information processing apparatus according to the embodiment determines whether or not the terminal is the target of applying the update program, based on the terminal information 322 of the terminal managed by the information processing apparatus.

According to the configuration, even though the setting or the version or the like of the applied program varies for each terminal, it is possible for a worker to determine whether or not the program update of a terminal is required, without checking the device number, the program version, or the like in the installation location of the terminal. It is also possible to eliminate the labor for the worker to manage the setting of a terminal, the version of the applied program, and the like, and a moving time for confirmation.

According to the configuration, a terminal in which the incident (update) occurrence function is invalidated can be excluded from the application of the update program. Generally, when the update program is applied, unexpected problems may occur. That is, it is possible to suppress an unnecessary application update and maintain an environment in which the terminal is stably operating, by not performing the application update relating to the function which is not used by the customer or by reducing the frequency of the update. The terminal such as the label printer 10 may be configured as an embedded device. Generally, in the embedded device, there is a demand for suppressing the memory capacity. That is, it is possible to suppress an unnecessary application update and suppress an increase in memory use due to the application of the update program, by not performing the application update relating to the function which is not used by the customer or by reducing the frequency of the update.

In the information processing system according to the embodiment, for the terminal determined to be the target of applying the update program, the information processing apparatus stores the update program in the program update folder 323 for this terminal. The terminal checks the presence of the update program, for example, at the timing at which the power turns on. When the terminal confirms the presence of the update program, the terminal updates the application of the own terminal by the update program. According to the configuration, regarding the terminal determined to be the target of applying the update program, it is possible to update the application of the terminal without the worker moving to the installation location or the worker designating a transmission destination and distributing the application.

According to the embodiment described above, it is possible to reduce a workload for updating a program of the terminal. The workload refers to, for example, man-hours and a work time required for each work. According to the embodiment, it is possible to reduce a mistake occurring in a determination or a work by a person. The reduction in mistake can suppress the generation of the extra workload.

The information processing apparatus of the embodiment includes a control device such as the CPU, a storage device such as the read only memory (ROM) and the RAM, an external storage device such as the HDD and a CD drive device, a display device, and an input device such as a keyboard and a mouse. The information processing apparatus has a hardware configuration using a general computer.

The control programs 121 and 321 executed by the information processing apparatus of the embodiment are recorded and provided in a computer readable recording medium such as a CD-ROM, a flexible disk (FD), a CD-R, and a digital versatile disk (DVD) as files of an installable format or an executable format.

The control programs 121 and 321 executed by the information processing apparatus of the embodiment may be stored in a computer connected to a network such as the Internet and be provided by being downloaded via the network. In the embodiment, the control programs 121 and 321 executed by the information processing apparatus may be provided or distributed via a network such as the Internet.

The control programs 121 and 321 executed by the information processing apparatus of the embodiment may be incorporated in a ROM or the like in advance to be provided.

The control program 121 executed by the information processing apparatus of the embodiment has a module configuration including the above-described units (the communication unit 101, the updating unit 102, the storage unit 103, the printing control unit 104, and the display control unit 105). The CPU (processor) reads the control program 121 from the storage medium and loads the above units on the main memory. Thus, the communication unit 101, the updating unit 102, the storage unit 103, the printing control unit 104, and the display control unit 105 are generated on the main memory.

The control program 321 executed by the information processing apparatus of the embodiment has a module configuration including the above-described units (the communication unit 301, the comparison unit 302, the update management unit 303, and the storage unit 304). The CPU (processor) reads the control program 321 from the storage medium and loads the above units on the main memory. Thus, the communication unit 301, the comparison unit 302, the update management unit 303, and the storage unit 304 are generated on the main memory.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the scope of the inventions. The scope of the invention is defined by the accompanying claims.

## Claims

1. An information processing apparatus (30) , comprising:
a storage unit (304) storing, for each of a plurality of terminals (10), terminal information (322) including customer use function and installed program version, wherein the customer use function indicating a function validated among a plurality of functions of an application installed on a terminal (10), and the installed program version indicating the version of the application installed on the terminal,
a communication unit (301) for receiving information (324, 325) including an update function indicating a function to be updated by applying an update program of updating the application among the plurality of functions of the application, and an update program version indicating a version of the application,
a comparison component (302) configured to compare, for each of the plurality of terminals (10) , the installed program version with the update program version and, if the two program versions coincide, to perform a function comparison of comparing the update function with the customer use function, and
an update management component (303) configured to determine, for each of the plurality of terminals (10), whether or not the terminal is a target of applying the update program based on the function comparison result by the comparison component.

2. The information processing apparatus according to claim 1, wherein when a function to be updated by applying the update program is validated in the terminal, the update management component determines that the terminal is a target of applying the update program.

3. The information processing apparatus according to claim 1 or 2, wherein
the terminal is one of a label printer, a point-of-sale system, and a measuring instrument.

4. The information processing apparatus according to any one of claims 1 to 3, wherein the update program comprises merchandise information.

5. The information processing apparatus according to claim 4, wherein the merchandise information comprises at least one of a merchandise name, a merchandise price, a processing date, a freshness date, an expiration date, and a production place.

6. An information processing system (1), comprising:
the information processing apparatus according to any one of claims 1 to 5, wherein the update management component is configured to store the update program in a predetermined storage area for the terminal when the terminal is determined to be a target of applying the update program; and
the terminal including a communication component (101) configured to check whether or not the update program exists in the predetermined storage area of the information processing apparatus.

7. The information processing system according to claim 6, wherein
when the function validated or invalidated among a plurality of functions of the application installed on the terminal is changed, the communication component transmits the terminal information to the information processing apparatus.

8. The information processing system according to claim 6 or 7, further comprising:
a display (141) configured to display a display screen for causing a user to confirm whether or not the update program is applied to the terminal, when the communication component confirms that the update program is stored in the predetermined storage area.

9. The information processing system according to any one of claims 6 to 8, wherein
the terminal is one of a label printer, a point-of-sale system, and a measuring instrument.

10. The information processing system according to any one of claims 6 to 9, wherein the update program comprises merchandise information.

11. The information processing system according to claim 10, wherein
the merchandise information comprises at least one of a merchandise name, a merchandise price, a processing date, a freshness date, an expiration date, and a production place.

12. A method of operating a system comprising an information processing apparatus (30) and a plurality of terminals (10), comprising:
storing, for each of a plurality of terminals (10), terminal information (322) including customer use function and installed program version, wherein the customer use function indicating a function validated among a plurality of functions of an application installed on a terminal (10) and the installed program version indicating the version of the application installed on the terminal,
receiving information (324, 325) including an update function indicating a function to be updated by applying an update program of updating the application among the plurality of functions of the application, and an update program version indicating a version of the application,
comparing for each of the plurality of terminals (10), the installed program version with the update program version and, if the two program versions coincide, performing a function comparison of comparing the update function with the customer use function, and
determining, for each of the plurality of terminals (10), whether or not the terminal is a target of applying the update program based on the function comparison result by the comparing.

13. The method according to claim 12, further comprising:
checking whether or not the update program exists in a predetermined storage area of the information processing apparatus.

14. The method according to claim 12 or 13, further comprising:
when the function validated or invalidated among a plurality of functions of the application installed on the terminal is changed, transmitting the terminal information to an information processing apparatus.

15. The method according to any one of claims 12 to 14, further comprising:
displaying a display screen for causing a user to confirm whether or not the update program is applied to the terminal, when confirming that the update program is stored in a predetermined storage area.

## Patentansprüche

1. Informationsverarbeitungsgerät (30), umfassend:
eine Speichereinheit (304), die für jedes einer Vielzahl von Endgeräten (10) Endgerätinformationen (322) speichert, die eine Kundenverwendungsfunktion und eine installierte Programmversion beinhalten, wobei die Kundennutzungsfunktion eine Funktion angibt, die aus einer Vielzahl von Funktionen einer auf einem Endgerät (10) installierten Anwendung validiert ist, und die installierte Programmversion die Version der auf dem Endgerät installierten Anwendung angibt,
eine Kommunikationseinheit (301) zum Empfangen von Informationen (324, 325), die eine Aktualisierungsfunktion, die eine zu aktualisierende Funktion durch Anwenden eines Aktualisierungsprogramms zum Aktualisieren der Anwendung unter der Vielzahl von Funktionen der Anwendung angibt, und eine Aktualisierungsprogrammversion, die eine Version der Anwendung angibt, beinhalten,
eine Vergleichskomponente (302), die konfiguriert ist, um für jedes der Vielzahl von Endgeräten (10) die installierte Programmversion mit der Aktualisierungsprogrammversion zu vergleichen und, wenn die zwei Programmversionen übereinstimmen, einen Funktionsvergleich eines Vergleichens der Aktualisierungsfunktion mit der Kundennutzungsfunktion durchzuführen, und
eine Aktualisierungsverwaltungskomponente (303), die konfiguriert ist, um für jedes der mehreren Endgeräte (10) basierend auf dem Funktionsvergleichsresultat durch die Vergleichskomponente zu bestimmen, ob das Endgerät ein Ziel der Anwendung des Aktualisierungsprogramms ist.

2. Informationsverarbeitungsgerät nach Anspruch 1, wobei, wenn eine durch Anwenden des Aktualisierungsprogramms zu aktualisierende Funktion in dem Endgerät validiert ist, die Aktualisierungsverwaltungskomponente bestimmt, dass das Endgerät ein Ziel eines Anwendens des Aktualisierungsprogramms ist.

3. Informationsverarbeitungsgerät nach Anspruch 1 oder 2, wobei das Endgerät einer von einem Etikettendrucker, einem Kassensystem oder einem Messinstrument ist.

4. Informationsverarbeitungsgerät nach einem der Ansprüche 1 bis 3, wobei das Aktualisierungsprogramm Wareninformationen umfasst.

5. Informationsverarbeitungsgerät nach Anspruch 4, wobei die Wareninformationen mindestens eines von einem Warennamen, einem Warenpreis, einem Verarbeitungsdatum, einem Frischedatum, einem Verfallsdatum und einem Produktionsort umfassen.

6. Informationsverarbeitungssystem (1), umfassend:
das Informationsverarbeitungsgerät nach einem der Ansprüche 1 bis 5, wobei die Aktualisierungsverwaltungskomponente konfiguriert ist, um das Aktualisierungsprogramm in einem vorbestimmten Speicherbereich für das Endgerät zu speichern, wenn das Endgerät als ein Ziel eines Anwendens des Aktualisierungsprogramms bestimmt wird; und
das Endgerät eine Kommunikationskomponente (101) beinhaltet, die konfiguriert ist, um zu prüfen, ob das Aktualisierungsprogramm in dem vorbestimmten Speicherbereich des Informationsverarbeitungsgeräts vorhanden ist.

7. Informationsverarbeitungssystem nach Anspruch 6, wobei
wenn die Funktion, die unter einer Vielzahl von Funktionen der auf dem Endgerät installierten Anwendung validiert oder invalidiert ist, geändert wird, die Kommunikationskomponente die Endgerätinformationen an das Informationsverarbeitungsgerät überträgt.

8. Informationsverarbeitungssystem nach Anspruch 6 oder 7, ferner umfassend:
eine Anzeige (141), die konfiguriert ist, um einen Anzeigebildschirm anzuzeigen, um einen Benutzer zu veranlassen, zu bestätigen, ob das Aktualisierungsprogramm auf das Endgerät angewendet wird, wenn die Kommunikationskomponente bestätigt, dass das Aktualisierungsprogramm in dem vorbestimmten Speicherbereich gespeichert ist.

9. Informationsverarbeitungssystem nach einem der Ansprüche 6 bis 8, wobei
das Endgerät eines von einem Etikettendrucker, ein Kassensystem oder ein Messinstrument ist.

10. Informationsverarbeitungssystem nach einem der Ansprüche 6 bis 9, wobei das Aktualisierungsprogramm Wareninformationen umfasst.

11. Informationsverarbeitungssystem nach Anspruch 10, wobei
die Wareninformationen mindestens eines von einem Warennamen, einem Warenpreis, einem Verarbeitungsdatum, einem Frischedatum, einem Verfallsdatum und einem Produktionsort umfassen.

12. Verfahren zum Betreiben eines Systems, umfassend ein Informationsverarbeitungsgerät (30) und eine Vielzahl von Endgeräten (10), umfassend:
Speichern, für jedes einer Vielzahl von Endgeräten (10), von Endgerätinformationen (322), die eine Kundennutzungsfunktion und eine installierte Programmversion beinhalten, wobei die Kundennutzungsfunktion eine Funktion angibt, die aus einer Vielzahl von Funktionen einer auf einem Endgerät (10) installierten Anwendung validiert ist, und die installierte Programmversion die Version der auf dem Endgerät installierten Anwendung angibt,
Empfangen von Informationen (324, 325), die eine Aktualisierungsfunktion, die eine zu aktualisierende Funktion durch Anwenden eines Aktualisierungsprogramms zum Aktualisieren der Anwendung unter der Vielzahl von Funktionen der Anwendung angibt, und eine Aktualisierungsprogrammversion, die eine Version der Anwendung angibt, beinhalten,
Vergleichen, für jedes der Vielzahl von Endgeräten (10), der installierten Programmversion mit der Aktualisierungsprogrammversion, und, wenn die beiden Programmversionen übereinstimmen, Durchführen eines Funktionsvergleichs des Vergleichens der Aktualisierungsfunktion mit der Kundenverwendungsfunktion, und
Bestimmen, für jedes der Vielzahl von Endgeräten (10), ob das Endgerät ein Ziel eines Anwendens des Aktualisierungsprogramms ist, basierend auf dem Funktionsvergleichsresultat durch das Vergleichen.

13. Verfahren nach Anspruch 12, ferner umfassend:
Prüfen, ob das Aktualisierungsprogramm in einem vorbestimmten Speicherbereich des Informationsverarbeitungsgeräts vorhanden ist.

14. Verfahren nach Anspruch 12 oder 13, ferner umfassend:
wenn die Funktion, die unter einer Vielzahl von Funktionen der auf dem Endgerät installierten Anwendung validiert oder invalidiert ist, geändert wird, Übertragen der Endgerätinformationen an ein Informationsverarbeitungsgerät.

15. Verfahren nach einem der Ansprüche 12 bis 14, ferner umfassend:
Anzeigen eines Anzeigebildschirms, um einen Benutzer zu veranlassen, zu bestätigen, ob das Aktualisierungsprogramm auf das Endgerät angewendet wird, wenn bestätigt ist, dass das Aktualisierungsprogramm in einem vorbestimmten Speicherbereich gespeichert ist.

## Revendications

1. Appareil de traitement d'informations (30), comprenant :
une unité de stockage (304) stockant, pour chaque terminal d'une pluralité de terminaux (10), des informations de terminal (322) comprenant une fonction d'utilisation de client et une version de programme installée, dans lequel la fonction d'utilisation de client indique une fonction validée parmi une pluralité de fonctions d'une application installée sur un terminal (10), et la version de programme installée indique la version de l'application installée sur le terminal ;
une unité de communication (301) destinée à recevoir des informations (324, 325) comprenant une fonction de mise à jour indiquant une fonction à mettre à jour en appliquant un programme de mise à jour visant à mettre à jour l'application parmi la pluralité de fonctions de l'application, et une version de programme de mise à jour indiquant une version de l'application ;
un composant de comparaison (302) configuré de manière à comparer, pour chaque terminal de la pluralité de terminaux (10), la version de programme installée avec la version de programme de mise à jour et, si les deux versions de programme coïncident, à effectuer une comparaison de fonction visant à comparer la fonction de mise à jour à la fonction d'utilisation de client ; et
un composant de gestion de mise à jour (303) configuré de manière à déterminer, pour chaque terminal de la pluralité de terminaux (10), si le terminal est ou non une cible pour l'application du programme de mise à jour sur la base du résultat de comparaison de fonction par le composant de comparaison.

2. Appareil de traitement d'informations selon la revendication 1, dans lequel, lorsqu'une fonction à mettre à jour en appliquant le programme de mise à jour est validée dans le terminal, le composant de gestion de mise à jour détermine que le terminal est une cible pour l'application du programme de mise à jour.

3. Appareil de traitement d'informations selon la revendication 1 ou 2, dans lequel :
le terminal est l'un des éléments parmi une imprimante d'étiquettes, un système de point de vente ou un instrument de mesure.

4. Appareil de traitement d'informations selon l'une quelconque des revendications 1 à 3, dans lequel le programme de mise à jour comprend des informations de marchandises.

5. Appareil de traitement d'informations selon la revendication 4, dans lequel les informations de marchandises comprennent au moins l'un des éléments parmi un nom de marchandise, un prix de marchandise, une date de traitement, une date de fraîcheur, une date de péremption et un lieu de production.

6. Système de traitement d'informations (1), comprenant :
l'appareil de traitement d'informations selon l'une quelconque des revendications 1 à 5, dans lequel le composant de gestion de mise à jour est configuré de manière à stocker le programme de mise à jour dans une zone de stockage prédéterminée pour le terminal lorsque le terminal est déterminé comme étant une cible pour l'application du programme de mise à jour ; et
le terminal comprenant un composant de communication (101) configuré de manière à vérifier si le programme de mise à jour existe ou non dans la zone de stockage prédéterminée de l'appareil de traitement d'informations.

7. Système de traitement d'informations selon la revendication 6, dans lequel :
lorsque la fonction validée ou invalidée parmi une pluralité de fonctions de l'application installée sur le terminal est modifiée, le composant de communication transmet les informations de terminal à l'appareil de traitement d'informations.

8. Système de traitement d'informations selon la revendication 6 ou 7, comprenant en outre :
un afficheur (141) configuré de manière à afficher un écran d'affichage pour amener un utilisateur à confirmer si le programme de mise à jour est appliqué ou non au terminal, lorsque le composant de communication confirme que le programme de mise à jour est stocké dans la zone de stockage prédéterminée.

9. Système de traitement d'informations selon l'une quelconque des revendications 6 à 8, dans lequel :
le terminal est l'un des éléments parmi une imprimante d'étiquettes, un système de point de vente ou un instrument de mesure.

10. Système de traitement d'informations selon l'une quelconque des revendications 6 à 9, dans lequel le programme de mise à jour comprend des informations de marchandises.

11. Système de traitement d'informations selon la revendication 10, dans lequel
les informations de marchandises comprennent au moins l'un des éléments parmi un nom de marchandise, un prix de marchandise, une date de traitement, une date de fraîcheur, une date de péremption et un lieu de production.

12. Procédé de fonctionnement d'un système comprenant un appareil de traitement d'informations (30) et une pluralité de terminaux (10), comprenant le fait de :
stocker, pour chaque terminal d'une pluralité de terminaux (10), des informations de terminal (322) comprenant une fonction d'utilisation de client et une version de programme installée, dans lequel la fonction d'utilisation de client indique une fonction validée parmi une pluralité de fonctions d'une application installée sur un terminal (10), et la version de programme installée indique la version de l'application installée sur le terminal ;
recevoir des informations (324, 325) comprenant une fonction de mise à jour indiquant une fonction à mettre à jour en appliquant un programme de mise à jour visant à mettre à jour l'application parmi la pluralité de fonctions de l'application, et une version de programme de mise à jour indiquant une version de l'application ;
comparer, pour chaque terminal de la pluralité de terminaux (10), la version de programme installée avec la version de programme de mise à jour et, si les deux versions de programme coïncident, effectuer une comparaison de fonction visant à comparer la fonction de mise à jour à la fonction d'utilisation de client ; et
déterminer, pour chaque terminal de la pluralité de terminaux (10), si le terminal est ou non une cible pour l'application du programme de mise à jour sur la base du résultat de comparaison de fonction à l'étape de comparaison.

13. Procédé selon la revendication 12, comprenant en outre le fait de :
vérifier si le programme de mise à jour existe ou non dans une zone de stockage prédéterminée de l'appareil de traitement d'informations.

14. Procédé selon la revendication 12 ou 13, comprenant en outre le fait de :
lorsque la fonction validée ou invalidée parmi une pluralité de fonctions de l'application installée sur le terminal est modifiée, transmettre les informations de terminal à un appareil de traitement d'informations.

15. Procédé selon l'une quelconque des revendications 12 à 14, comprenant en outre le fait de :
afficher un écran d'affichage pour amener un utilisateur à confirmer si le programme de mise à jour est appliqué ou non au terminal, lors de la confirmation que le programme de mise à jour est stocké dans la zone de stockage prédéterminée.
